# EUROPEAN PATENT APPLICATION

(11) **EP 4 726 613 A1**
(43) Date of publication of application: **15.04.2026**
(21) Application number: 24383105.4
(22) Date of filing: 10.10.2024
(51) Int. Cl.: G06N 10/60, G06N 10/20, G06N 3/082, G06N 3/09, G06N 10/40, G06N 3/0455, G06N 3/0464, G06N 3/0475, G06N 3/0495

(54) **METHOD AND SYSTEM FOR MODIFYING A QUANTUM NEURAL NETWORK**

(71) Applicant: Multiverse Computing, S.L., 20014 Donostia - San Sebastian, Guipuzcoa (ES)
(72) Inventor: ORUS, Roman, Donostia (Gipuzkoa) (ES); JAHROMI, Saeed, Donostia (Gipuzkoa) (ES); SINGH, Sukhbinder, Toronto (CA); TOMUT, Andrei, Donostia (Gipuzkoa) (ES)
(74) Representative: Balder IP Law, S.L.

(57) **Abstract**

A method for modifying a quantum neural network, comprising: identifying via computer means information that needs to be erased from a trained quantum neural network; localizing via the computer means the identified information in the trained quantum neural network; erasing via the computer means the identified information from the trained quantum neural network without erasing from the trained quantum neural network other information that needs not to be erased; compressing via the computer means the quantum neural network which results when the identified information has been erased. Also, a system.

## Description

### TECHNICAL FIELD

The present invention relates to a method for modifying a quantum neural network. Also, the present invention relates to a system for modifying the quantum neural network. Moreover, the present invention relates to the use of said method or system.

### STATE OF THE ART

There are known quantum neural networks (QNNs) which may be used in a variety of different applications, for example, in machine learning. However, the development and optimization of QNNs for different applications may be hindered by the large computing resources which are typically needed for this purpose. Typically, the training of a quantum neural network (QNN) using a computer is an energy intensive and time-consuming process that requires large computing power and other computational resources. Moreover, an original training of a QNN may eventually be found to be suboptimal or unsuccessful for the intended application of the QNN. When training a QNN using a training dataset, it may be understood that because of the training, information is stored in the QNN, and the stored information contributes to the functioning of the QNN for the latter's intended application. Hence, if an original training appears to be suboptimal or unsuccessful for the intended application of the QNN, this problem may at least be partly related to the information stored in the QNN via the latter's original training. The conventional solution to this problem is retraining from the beginning (i.e. from scratch) the original untrained QNN using a different or a modified training dataset compared to the one used in the original training. The obvious problem and drawback with this conventional approach is that retraining the QNN from scratch also requires large amounts of computational resources, especially computing power, time and electrical energy for retraining the QNN. Therefore, it is required overcoming the aforementioned drawback that exists with conventional methods and system for optimizing QNNs.

### DESCRIPTION OF THE INVENTION

The present invention overcomes the aforementioned drawback of known conventional methods for optimizing QNNs. Advantageously, the present invention allows for reducing the computational resources needed for optimizing and improving an originally trained QNN.

Hence, the present invention allows for reducing the computing power, time, memory storage and the energy that may be required for the modification, improvement and optimization of an originally trained QNN so that the QNN's function becomes better for the intended application. This may be particularly useful if the original training of a QNN is found to be suboptimal or unsuccessful for the purpose of the intended application of the QNN. Also, advantageously, the present invention may allow for improving the function of a QNN for a variety of different applications and may also be applied to different QNNs.

A first aspect of the invention concerns a method for modifying a quantum neural network, the method comprising: identifying via computer means information that needs to be erased from a trained quantum neural network; localizing via the computer means the identified information in the trained quantum neural network; erasing via the computer means the identified information from the trained quantum neural network without erasing from the trained quantum neural network other information that needs not to be erased; compressing via the computer means the quantum neural network which results when the identified information has been erased.

It may be understood that the identified information to be erased may be or comprise information that has been stored in the quantum neural network (QNN) as a result of the QNN's original training, i.e. the training that has been applied to the quantum neural network before the step of identifying the information that needs to be erased. This information to be erased may be information which, after the original training, is proven to be suboptimal or detrimental for an intended application of the QNN. In a non-limiting example, said information to be erased may have been stored in the QNN as a result of a particular subset of training data within an overall training dataset that was used for the original training of the QNN. Likewise, the other information that needs not to be erased from the trained QNN, may be or comprise other information that was also stored in the QNN as a result of the original training, but is deemed to be beneficial or at least not detrimental or not redundant for the intended application of the QNN. Therefore, the method of the first aspect of the invention may advantageously allow for distinguishing between different types of information stored or codified in the QNN, and for selectively removing only some of the stored or codified information, while leaving some other of the stored or codified information, such that the resulting QNN may advantageously carry some of the information from the original training. This way, if after an initial training of the QNN it is found or assumed that some of the information stored in the QNN as a result of the initial training is not ideal or is detrimental for the intended application of the QNN, the method of the first aspect may advantageously allow for not having to retrain from scratch the QNN. The training or retraining of the QNN is done with the use of computing means e.g. one or more computers. By not having to retrain the QNN from scratch, valuable computational resources, such as computing power, computer time, memory space, and electrical energy can be saved. The savings in the computational resources may optionally also take the form of using fewer hardware components (e.g. less microprocessors) or less advanced hardware compared to what would be required in case that the QNN would have to be trained from scratch. Therefore, it may be understood that an advantageous technical effect of the first aspect of the invention is saving computational resources, and possibly environmental resources, for improving and adapting a QNN to an intended application, after a first training of the QNN is found to be suboptimal for the QNN's intended application.

It is noted that the information to be erased from the originally trained QNN may be codified in the QNN locally and/or non-locally. Hence, in a preferred embodiment of the method of the first aspect of the invention, the identified information that needs to be erased comprises information which is codified locally in a quantum unitary operation of the trained quantum neural network. Also, in a preferred embodiment of the method of the first aspect of the invention, the identified information that needs to be erased comprises information which is codified non-locally in correlations amongst different qubits of the trained quantum neural network. By eliminating selectively information that is stored locally in one or more quantum unitary operations of the QNN, and/or non-locally in correlations between different qubits, a fine tuning and related optimization of the QNN for its intended application may advantageously be achieved while at the same time, as mentioned above, valuable computational resources may be saved.

Advantageously, the method's step of localizing via the computer means the identified information in the trained quantum neural network may allow for achieving a fine and targeted modification and related improvement of the QNN. Moreover, in a preferred embodiment, said step of localizing the identified information comprises: providing via the computing means an input to the trained quantum neural network for triggering the quantum neural network; and measuring via the computing means an activation of parameters and/or correlations in the triggered trained quantum neural network. For instance, in a specific embodiment of the method, the QNN may be implemented in a quantum computer made of superconducting qubits, with the QNN being made of variational quantum gates. In the latter specific embodiment, the trained QNN may have fine-tuned parameters of the quantum gates, which may trigger the responses of the QNN. In the latter specific embodiment, the responses of the QNN may be inferred from the measurements of the qubits in the 0/1 basis after the quantum circuit has been implemented. In the latter specific embodiment, to determine where the information to be erased is, there may be measured the 0/1 basis of the qubits after every layer of variational gates, to determine the flow of information and identify the more relevant quantum gates for the specific triggering. It is noted that the aforementioned optional steps of providing the input to the QNN for triggering the QNN, and measuring the activation of parameters and/or correlations in the QNN, may advantageously facilitate accurately localizing the information to be erased. In a non-limiting example, said input that may be optionally used for localizing the identified information to be erased is an input for which it is known that, when the input is provided to the QNN, a corresponding output from the QNN is erroneous or suboptimal in the context of an intended application of the QNN. Such an input causing an erroneous or suboptimal output may cause the activation of parameters and/or correlations related to the operation of the QNN and part's therein (i.e. parts of/in the QNN), and said parameters and/or correlations may be related to the information that needs to be erased. For example, said parameters and correlations may respectively be associated with quantum unitary operations and correlations amongst different qubits of the trained QNN. Hence, the measurement of said parameters and/or correlations under a particular activation of the QNN may be used for localizing in the trained QNN the information that needs to be erased. However, it is noted that in another non-limiting example, the aforementioned input which is optionally used for triggering the QNN for the purpose of localizing the identified information, is one that causes the QNN to produce an output which in the context of the intended application of the QNN is considered to be a "good" or optimal output. An input that causes a "good" output could for example be used for localizing in the QNN information that may possibly be redundant or unimportant for the production of the good output, and it may optionally be determined that said redundant or unimportant information is to be removed.

Overall, as can be understood from the disclosure herein, the method of the first aspect of the invention may advantageously allow for saving computational and physical resources (e.g. electrical energy) for improving an originally trained QNN for which its initial training has resulted to the inclusion or storage in the QNN of some information which should be removed in the context of an intended application of the QNN. The present information allows for selectively removing said information without having to remove other information which may also have been included (stored) in the QNN via said original training and may be useful for the QNN's application. It is contemplated the possibility that in some embodiments of the invention the initial storage in the QNN of the information that needs to be removed from the QNN by the present method, may be related to a first part (i.e. first subset) of a dataset used for the original training of the QNN, and that the initial storage in the QNN of the information that needs not to be removed from the QNN by the present method, may be related to a second part (i.e. second subset) of the dataset used for said original training of the QNN. Hence, it is contemplated the possibility that in some preferred embodiments of the herein disclosed invention, after compressing the QNN that results from removing some unwanted information from the originally trained QNN while not removing from said originally trained QNN some other information, retraining the compressed QNN may be done with a retraining dataset which is smaller compared to the one used for the original training, because the retraining dataset may need not to cause storage in the QNN of information which was already stored in the QNN from the original training and was not removed. Hence, a significant saving in the computational resources and energy that is required for the optimization of the QNN may be achieved.

It may be understood that the method of the first aspect of the invention may provide a compressed QNN which may be subsequently retrained and used for an intended application. Said retraining may preferably be part of the method. Hence, in a preferred embodiment of the first aspect of the invention, the method further comprising retraining via the computing means the compressed quantum neural network. More preferably, the method further comprises outputting via the computing means the retrained quantum neural network.

As method further above, the method of the first aspect of the invention comprises the step of compressing via the computer means the quantum neural network which results when the identified information has been erased. In a preferred embodiment of the invention, said compressing may advantageously result to reducing the resource requirements, e.g. hardware requirements and/or computational resources, and the energy required to possibly re-train and implement the QNN. Moreover, said compressing may advantageously potentially render the QNN faster and more scalable for allowing it handling large datasets or more complex problems without a significant increase in the resource requirements. It is noted that making a QNN faster may advantageously be particularly beneficial for potential real-time applications that require low latency.

In a preferred embodiment of the first aspect of the invention, the compressed quantum neural network is shallower than the quantum neural network to which the compressing is applied. A shallower QNN may have fewer layers and, hence, a reduced circuit depth in the quantum domain, which may in advantageously lead to faster computation times and lower energy consumption during the implementation of the QNN, compared to the QNN before the compressing. Moreover, advantageously it may be easier to optionally implement the shallower QNN via quantum hardware, considering that typically there may be limitations with respect to the qubits and gates that may be efficiently utilized with the quantum hardware.

The trained QNN may preferably be any of a quantum convolutional neural network, quantum transformer architecture, or a quantum language model, especially a quantum large language model. A quantum convolutional neural network may advantageously enable leveraging quantum operations for performing various different tasks such as, for example, processing image data for a variety of different applications such as medical diagnosis, satellite image processing for environmental monitoring or object detections, or another application. A quantum transformer architecture may advantageously enable the application of computing principles to transformer models for enhancing their ability to process sequential data such as, for example, text or time series, for various different applications such as language translation or sentiment analysis. A quantum language model may advantageously enable utilizing quantum algorithms and preferably quantum computing hardware to enhance the efficiency and capabilities of traditional language models, and may potentially offer advantages, such as higher speeds, in processing large volumes of text data and/or in generating more accurate and contextually relevant outputs compared a traditional language models.

The steps of the method of the first aspect of the invention are implemented via the computing means. Therefore, it can be understood that the computing means are used for the performance of the steps of the method of the first aspect of the invention. In a preferred embodiment said steps are performed automatically by the computing means which for this purpose may be programmed accordingly. Therefore, in a preferred embodiment the method is a computer implemented method i.e. a method that is automatically implemented by the computing means. However, in another embodiment the performance of the method may not be fully automatic, in the sense that some manual input from a user of the computing means may be required for the implementation of one or more of the steps of the method of the first aspect of the invention. However, preferably the step of erasing the identified information from the QNN without erasing from the QNN the other information that needs not to be erased, and the step of compressing the quantum neural network which results when the identified information has been erased, are performed by the computing means which for this purpose may be accordingly configured (i.e. programmed) to perform these steps.

It may be understood that the computing means may comprise one or more computers, and said one or more computers may comprise a classical computer, or a quantum computer or a combination of classical and quantum computers. Also, it may be understood that the computing means may comprise quantum computing means (i.e. quantum computing hardware) and/or classical computing means (i.e. classical computing hardware). Hence, in some preferred embodiments of the invention, the computing means comprise quantum computing means and/or classical computing means. Also, it may be understood that in the optional case that the computing means comprise a plurality of computers, the different steps of the method may be performed in the same or in different ones of the plurality of computers.

Advantageously, the present invention may be used for modifying and optimizing QNNs for a variety of intended applications, uses and purposes. Some non-limiting examples of the possible applications of a QNN which may be modified by the method of the first aspect of the invention are in machine learning, in quality control and automation and/or process optimization for the manufacturing of goods, in route optimization and warehouse automation for the logistics industry, in predictive maintenance and grid and energy storage optimization for the energy industry, or in the automatic vehicle navigation and route optimization in the mobility industry. Likewise, with respect to the potential applications of a QNN that may processed with the method of the first aspect of the invention, said QNN preferably may be a quantum language model that could optionally be used for natural language understanding, language generation and/or speed recognition. Considering the above, a second aspect of the invention concerns the use of the method of the first aspect of the invention for providing a quantum neural network for application in any of the following: machine learning, manufacturing, logistics, the energy industry or the mobility industry, preferably the quantum neural network being a quantum language model. For example, in manufacturing the method of the first aspect of the invention may preferably be implemented for a developing a QNN for predictive maintenance, specifically for predicting the failures of a machine in a production line before the failures actually happen.

A third aspect of the invention concerns a system for modifying a quantum neural network, the system comprising: computing means; a first module configured to identify via the computing means information that needs to be erased from a trained quantum neural network; a second module configured to localize via the computing means the identified information in the trained quantum neural network; a third module configured to erase via the computing means the identified information from the trained quantum neural network without erasing from the quantum neural network other information that needs not to be erased; a fourth module configured to compress via the computing means the quantum neural network which results when the identified information has been erased.

The aforementioned modules of the system of the third aspect of the invention, may optionally comprise respective computing hardware and/or software that is configured for the performance of the respective functionality of each module. In a preferred embodiment, said modules are respective components of a computer program comprising instructions which, when the program is executed by the computing means, cause the computing means to carry out the steps of the method of the first aspect of the invention. Accordingly, a further aspect of the invention concerns said computer program.

In a preferred embodiment of the third aspect of the invention, the first module is connectable to the second module, the third module is connectable to the second module, and the fourth module is connectable to the third module such that, during an operation of the system, the first module can provide the identified information to the second module, the second module can provide to the third module data regarding the localizing of the identified information, and the third module can provide to the fourth module the resulting quantum neural network which is without the erased information. The aforementioned interconnectivity between the different modules of the system, may advantageously facilitate the fast function of the system, and may also advantageously contribute to said function being automatic or semi-automatic.

In a preferred embodiment of the system of the third aspect of the invention, the system further comprises the following: a fifth module configured to retrain via the computing means the compressed quantum neural network; and a sixth module configured to output via the computing means the retrained quantum neural network. Preferably the fifth module is connectable to the fourth module, and the sixth module is connectable to the fifth module such that, during an operation of the system, the fourth module can provide to the fifth module the compressed quantum neural network, and the fifth module can provide to the sixth module the retrained quantum neural network. Similarly to what is mentioned further above in relation to the first, second, third and fourth modules, optionally and preferably the aforementioned optional fifth and sixth modules may comprise respective computing hardware and/or software that is configured for the performance of the respective functionality of each module.

Preferably the computing means of the system of the third aspect of the invention comprise quantum computing hardware which employes (i.e. is configured to employ) any of the following: quantum circuits, superconducting qubits, ion traps, neutral atoms, a photonic system, a solid-state system or combinations thereon. Said quantum hardware may be configured to implement partly or wholly one or more of the steps of the method of the first aspect of the invention. More preferably, said quantum computing hardware may be used, and be correspondingly configured to, implement the trained QNN for the purpose of localizing the information to be erased from the trained QNN. Hence, in a preferred embodiment the computing means comprise a quantum computing hardware which is configured to implement the QNN, and the second module is configured to localize the identified information in the trained QNN when the latter is implemented in said quantum computing hardware. More preferably, during said implementation of the trained QNN via said optional quantum hardware, an input is provided to the QNN for triggering the information that needs to be erased from the QNN. However, it is noted that the steps of the method of the first aspect of the invention, including the optional step of re-training the compressed QNN, may optionally be performed by classical computing means. Nevertheless, even in the optional case that said steps are done by classical computing means, the system may preferably comprise the aforementioned quantum computing hardware for implementing the QNN that results from the overall method. Therefore, it may be understood that in a preferred embodiment that comprises the aforementioned optional fifth and sixth modules, the system comprises quantum computing hardware that is configured to implement the retrained QNN that is outputted by the sixth module. The aforementioned quantum computing hardware may for example employ superconducting qubits which are connected according to a lattice topology with electronic wires, and are manipulated and measured via electronic signals. In another example, the quantum computing hardware may employe ion traps. In the latter case, qubits may be ions of, for instance, Calcium atoms, which may be manipulated and measured via laser light, and trapped by RF electromagnetic fields.

It may be understood that the method of the first aspect of the invention may be implemented using the system of the second aspect of the invention. Hence, it may be understood that any optional or preferable features mentioned herein with respect to the first aspect of the invention, may correspond to respective optional or preferable features of the third or second aspect of the invention, and vice versa.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a flow diagram of preferred embodiment of a method according to the first aspect of the invention.
Fig. 2 illustrates a flow diagram of preferred embodiment of a method according to the first aspect of the invention.
Fig. 3 illustrates a block diagram of preferred embodiment of a system according to the third aspect of the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing digital circuits and methods according to the invention, and some related operations and other information.

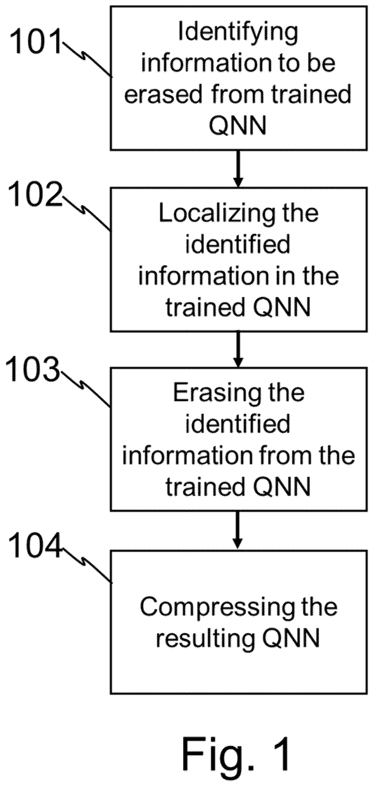

A preferred embodiment of a method of the first aspect of the invention is explained next with reference to Fig. 1. The method of Fig. 1 comprises the following steps:
Step 101: Identifying information to be erased from a trained quantum neural network QNN.
Step 102: Localizing via the computer means the information that is identified in step 101.
Step 103: Erasing, via the computer means, from the trained quantum neural network the identified and localized information, without erasing from the trained quantum neural network other information that needs not to be erased.
Step 104: Compressing via the computer means the quantum neural network which results from the erasure of the information in step 103.

In the embodiment of Fig. 1, the computing means are classical computing means comprising computers in which data are encoded using series of 0s and 1s and which comprise digital circuits for performing computations. However, in another preferred embodiment which is similar to the embodiment of Fig. 1, the computing means further comprise quantum computing means comprising a quantum processor and being configured to implement the trained QNN, and step 102 involves implementing the trained QNN via the quantum computing means.

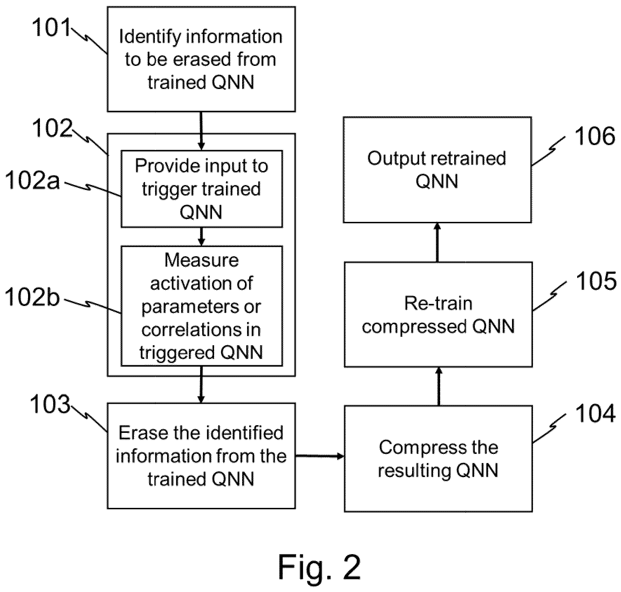

Another preferred embodiment of a method of the first aspect of the invention is explained next with reference to Fig. 2. The embodiment of Fig. 2 comprises the steps of the embodiment of Fig. 1, and further comprises the following additional steps:
Step 105: Retraining via the computing means the compressed quantum neural network that results from step 104.
Step 106: Outputting via the computing means the retrained quantum neural network that results from step 105.

Also, in the embodiment of Fig. 2, step 102 comprises the following two sub-steps:
Sub-step 102a: Providing via the computing means an input to the trained quantum neural network for triggering the quantum neural network.
Sub-step 102b: Measuring via the computing means an activation of parameters and/or correlations in the triggered trained quantum neural network.

Preferably, the computing means used for implementing the embodiment of Fig. 2 comprise classical computing means and the compressed QNN's retraining in step 105 is performed via the classical computing means and the use of a training dataset which is smaller (i.e. occupies less memory space for its storage) compared to an original dataset used for the original training of the QNN. Also, and related to the smaller size of the dataset for the retraining in step 105, and also related to the fact that the QNN used in step 105 is compressed, said retraining in step 105 may be executed by the computing means faster and with spending less computational resources compared to what would be required if the computing means were to perform again the original training of the original QNN, or compared to what would be required if the computing means were to train the compressed QNN using the whole original dataset that was used during the original training. Hence, by the application of the preferred embodiment of Fig.2, valuable computational resources and energy may be advantageously saved.

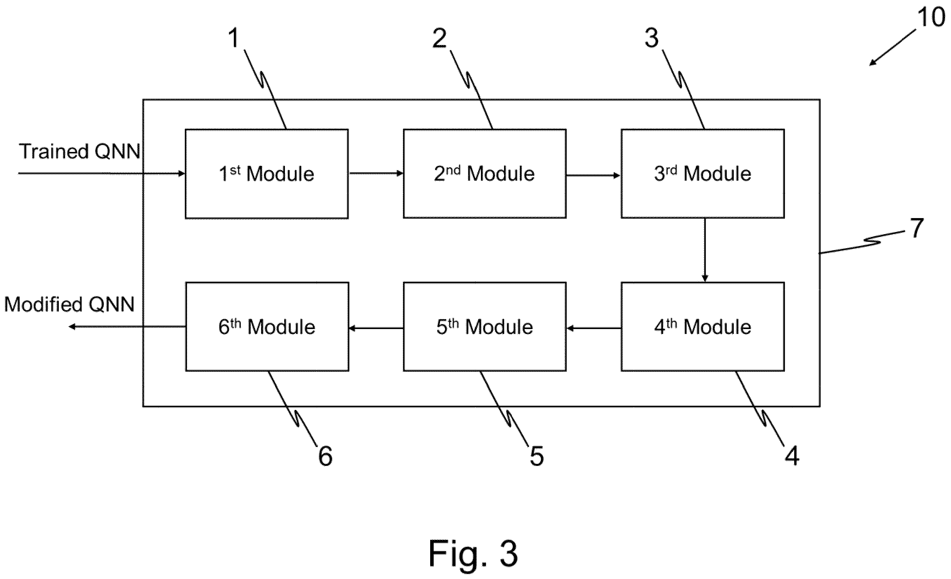

A preferred embodiment of a system of the third aspect of the invention is explained next with reference to Fig. 3. The system 10 of Fig. 3, comprises the following: computing means 7; a first module 1, a second module 2, a third module 3, a fourth module 4, a fifth module 5 and a sixth module 6. The first module 1 is configured to identify via the computing means 7 information that needs to be erased from a trained quantum neural network. The second module 2 is configured to localize via the computing means 7 the identified information in the trained quantum neural network. In the embodiment of Fig. 3, the localization of information is done by measuring, via the computing means 7, the activation of parameters and correlations in the system that implements the quantum neural network when an input to the system triggers the data (i.e. the information) that need to be erased from the QNN. The third module 3 is configured to erase via the computing means 7 the identified information from the trained quantum neural network, without erasing from the quantum neural network other information that needs not to be erased. The fourth module 4 is configured to compress via the computing means 7 the quantum neural network which results when the identified information has been erased. Also, in the system of Fig. 3, the first module 1 is connectable to the second module 2, the third module 3 is connectable to the second module 2, and the fourth module 4 is connectable to the third module 3 such that, during an operation of the system 10, the first module 1 can provide the identified information to the second module 2, the second module 2 can provide to the third module 3 data regarding the localizing of the identified information, and the third module 3 can provide to the fourth module 4 the resulting quantum neural network which is without the erased information. In addition, in the system 10 of Fig. 3, the fifth module 5 is connectable to the fourth module 4, and the sixth module 6 is connectable to the fifth module 5 such that, during the operation of the system 10, the fourth module 4 can provide to the fifth module 5 the compressed quantum neural network, and the fifth module 5 can provide to the sixth module 6 the retrained quantum neural network. Also, the aforementioned modules of the system of Fig. 3 are respective parts of a computer program which is implemented by (i.e. via) the computer means 7. Hence, it may be understood that said computer program comprises computer instructions which when executed by the computer means execute the method of Fig. 2. The computing means of the system of Fig. 3 comprise classical computing means used for implementing steps 101-106. However, other preferred embodiments of the third aspect of the invention are similar to the one of Fig. 3 with the difference that in said other preferred embodiment the computing means comprise quantum computing means which is used for implementing the QNN. For example, in such a preferred embodiment, the second module 2 for the purpose of localizing the information that needs to be erased, is configured to implement the aforementioned sub-steps 102a and 102b. In the latter case, for executing steps 102a and 102b, said quantum computing means are used for implementing the trained QNN, and during said implementation of the trained QNN, an input is provided to the QNN for triggering the latter, so that the activation of parameters and correlations in the triggered QNN is measured.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for modifying a quantum neural network, comprising:
- identifying via computer means information that needs to be erased from a trained quantum neural network;
- localizing via the computer means the identified information in the trained quantum neural network;
- erasing via the computer means the identified information from the trained quantum neural network without erasing from the trained quantum neural network other information that needs not to be erased;
- compressing via the computer means the quantum neural network which results when the identified information has been erased.

2. A method according to claim 1, further comprising:
retraining via the computing means the compressed quantum neural network.

3. A method according to claim 2, further comprising:
Outputting via the computing means the retrained quantum neural network.

4. A method according to any of the previous claims, wherein localizing the identified information comprises:
- providing via the computing means an input to the trained quantum neural network for triggering the quantum neural network;
- measuring via the computing means an activation of parameters and/or correlations in the triggered trained quantum neural network.

5. A method according to any of the previous claims, wherein the identified information that needs to be erased comprises information which is codified locally in quantum unitary operation of the trained quantum neural network.

6. A method according to any of the previous claims, wherein the identified information that needs to be erased comprises information which is codified non-locally in correlations amongst different qubits of the trained quantum neural network.

7. A method according to any of the previous claims, wherein the compressed quantum neural network is shallower than the quantum neural network to which the compressing is applied.

8. A method according to any of the previous claims, wherein the trained quantum neural network is any of a quantum convolutional neural network, quantum transformer architecture, or a quantum language model.

9. A method according to any of the previous claims, wherein the method is a computer-implemented method.

10. Use of the method of any of the previous claims for providing a quantum neural network for application in any of the following: machine learning, manufacturing, logistics, the energy industry or the mobility industry, preferably the quantum neural network being a quantum language model.

11. A system for modifying a quantum neural network, the system comprising:
- computing means (7);
- a first module (1) configured to identify via the computing means (7) information that needs to be erased from a trained quantum neural network;
- a second module (2) configured to localize via the computing means (7) the identified information in the trained quantum neural network;
- a third module (3) configured to erase via the computing means (7) the identified information from the trained quantum neural network without erasing from the quantum neural network other information that needs not to be erased;
- a fourth module (4) configured to compress via the computing means (7) the quantum neural network which results when the identified information has been erased.

12. A system according to claim 11, wherein the first module (1) is connectable to the second module (2), the third module (3) is connectable to the second module (2), and the fourth module (4) is connectable to the third module (3) such that, during an operation of the system, the first module (1) can provide the identified information to the second module (2), the second module (2) can provide to the third module (3) data regarding the localizing of the identified information, and the third module (3) can provide to the fourth module (4) the resulting quantum neural network which is without the erased information.

13. A system according to any of claims 11-12, further comprising:
- a fifth module (5) configured to retrain via the computing means (7) the compressed quantum neural network; and,
- a sixth module (6) configured to output via the computing means (7) the retrained quantum neural network,
preferably the fifth module (5) being connectable to the fourth module (4), and the sixth module (6) being connectable to the fifth module (5) such that, during an operation of the system, the fourth module (4) can provide to the fifth module (5) the compressed quantum neural network, and the fifth module (5) can provide to the sixth module (6) the retrained quantum neural network.

14. A system according to any of claims 11-13, wherein the computing means (7) comprise quantum computing means and/or classical computing means.

15. A system according to any of claims 12-14, wherein the computing means (7) comprise quantum computing hardware which employes any of the following: quantum circuits, superconducting qubits, ion traps, neutral atoms, a photonic system, a solid-state system or combinations thereon.
